# EUROPEAN PATENT APPLICATION

(11) **EP 1 666 223 A1**
(43) Date of publication of application: **07.06.2006**
(21) Application number: 04425720.2
(22) Date of filing: 27.09.2004
(51) Int. Cl.: B29B 17/00, B29C 47/92, B29B 7/80, B29B 7/26, B29B 7/46, B29C 47/40

(54) **Densifier system and relative method for treatment of plastic materials**

(71) Applicant: Italrec S.R.L., 21047 Saronno (Varese) (IT)
(72) Inventor: Cattaneo, Cristina, 21047 Saronno (VA) (IT)
(74) Representative: Petruzziello, Aldo

(57) **Abstract**

A densifier system (100) for treatment of plastic materials with a high moisture content and low bulk density comprises a densifier chamber (3) inside which two screws or worms (4) rotate with opposite directions of rotation, consisting of a feed portion (2) having an aperture (8) wherein the plastic material is fed, and a densifier cylinder (9) which serves to convey the plastic material against a densifier plate (10) wherein the plastic material is heated by friction. The densifier system further comprises an outlet duct (12) communicating with the densifier chamber (3) through a hole (11) defined in the densifier plate (10), wherefrom the plastic material exits, a control valve (20) provided with a shutter (21) to control the flow of the plasticated material and means (16) to measure the temperature of the plasticated material and to control accordingly the movement of the shutter (21) of the control valve (20).

## Description

The present invention refers to a densifier system and to the relative method for treatment of plastic materials (virgin or recovered).

Various types of densifier systems are currently known for the treatment of any plastic material and in particular for the treatment of recovered products, identified as heterogeneous plastic materials derived from sorting of household waste. Densifier systems are used to compact and to densify heterogeneous plastic materials with a very low bulk density, about 0.03 gr/cm³, so as to obtain a densified plastic material with a suitable bulk density for use in subsequent manufacturing processes, such as extrusion, moulding, powdering and the like. In fact, as is known to the art, plastic materials with a very low bulk density lead to a low productivity in the extrusion process.

The solutions currently proposed on the market tackle partial aspects of the following problems:
- drastic reduction in moisture content of the product supplied;
- increase in bulk density of the output product;
- control of the plastication degree of the output product; and
- contained, competitive power costs in the densifier process.

In existing densifiers it often happens that the material is not adequately heated and plasticated. Vice versa it may happen that the material is heated excessively, reaching a too high temperature, which causes degradation of the material. Furthermore, with materials that contain a high percentage of residual moisture (up to 20% of the total weight of the product) due to different factors such as, for example, the washing steps of the products which can precede the densification, the storage of the products in open spaces, etc., the correct densification and plastication is difficult to achieve as a part of the heat fed to the material serves for the evaporation of the water contained therein.

Another drawback of the existing densifiers is due to the fact that, when heterogeneous products with a very low bulk density of about 0.03 gr/cm³ are treated, various difficulties are encountered in densifying the product to a sufficiently high density to ensure an adequate densifier productivity or flow rate (kg/h) in the subsequent manufacturing processes. Consequently, to obtain a high bulk density it is necessary to increase the size and the installed power, with the result of high power consumption and of a large overall dimension of the machine.

Object of the present invention is to overcome the drawbacks of the alternative existing methods by providing a densifier system and a relative method for treatment of heterogeneous materials that are able to control all aspects of the plastication process, with highly competitive power consumption.

Another object of the present invention is to provide a densifier system and a method for treatment of heterogeneous materials that are able to drastically reduce the moisture content of the products treated.

Another object of the present invention is to provide a densifier system that is compact and able to minimize the power consumption of the process.

These objects are achieved according to the invention with the device and the method whose characteristics are listed in appended independent claims 1 and 6, respectively.

Advantageous embodiments of the invention are apparent from the dependent claims.

The densifier system according to the invention for treatment of plastic materials with high moisture content and low bulk density comprises a densifier chamber, wherein two screws or worms rotate with opposite directions of rotation. The densifier chamber comprises:
- a feed portion having an opening in which the plastic material is fed, and
- a densifier cylinder, disposed in front of the feed portion.

The densifier cylinder serves to convey the plastic material against a densifier plate disposed therein. The plastic material pushed by the screws against the densifier plate is heated by friction.

The densifier system further comprises an outlet duct, communicating with the densifier chamber through a hole defined in said densifier plate, from which the plastic material exits.

The main characteristic of the invention is the fact that the densifier system further comprises:
- a choke valve designed to control the flow (and consequently the time of stay) of the plasticated material inside the densifier chamber; and
- temperature detecting systems disposed in the densifier cylinder to measure the correct temperature of the plasticated material, modulating opening and closing of the choke valve.

The system designed and developed according to the invention is based on a plasticator with a dual counter-rotating screw with a plastication chamber having a high feeding surface, which facilitates the entry of the material having a low bulk density. Thanks to the two counter-rotating screws the material is subjected to conveying and mastication with pushing of the product towards the densifier plate, which allows the development of the plastication process. During plastication the materials are extruded through an outlet aperture which has, in the extrusion channel, the choke valve which controls, through the flow opening for the passage of the product, the time of stay of said product in the plastication chamber, conditioning the flow rate as well as the level of plastication to be optimized according to the product of interest.

Further characteristics of the invention will be made clearer by the detailed description that follows, referring to a purely exemplifying and therefore non-limiting embodiment thereof, illustrated in the appended drawings, in which:
Figure 1 is a side elevational view, partially sectional, showing a densifier according to the invention;
Figure 2 is a top plan view of the densifier of Figure 1;
Figure 3 is a diagrammatic plan view, showing the part relating to the densifier chamber of the densifier of Figure 2;
Figure 4 is a sectional view taken along the vertical plane of section IV-IV of Figure 3;
Figure 5 is a front view showing the duct and the control valve of the densifier of Figure 1;
Figure 6 is an axial sectional view, taken along the vertical plane of section VI-VI of Figure 5, showing the piston of the control valve in the completely open position;
Figure 7 is an axial sectional view like Figure 6, showing the piston of the control valve in the semi-open position, and
Figure 8 is a block diagram showing the control system of the valve of the densifier device according to the invention.

The densifier system according to the invention, indicated as a whole with reference numeral 100, is described with the aid of the drawings.

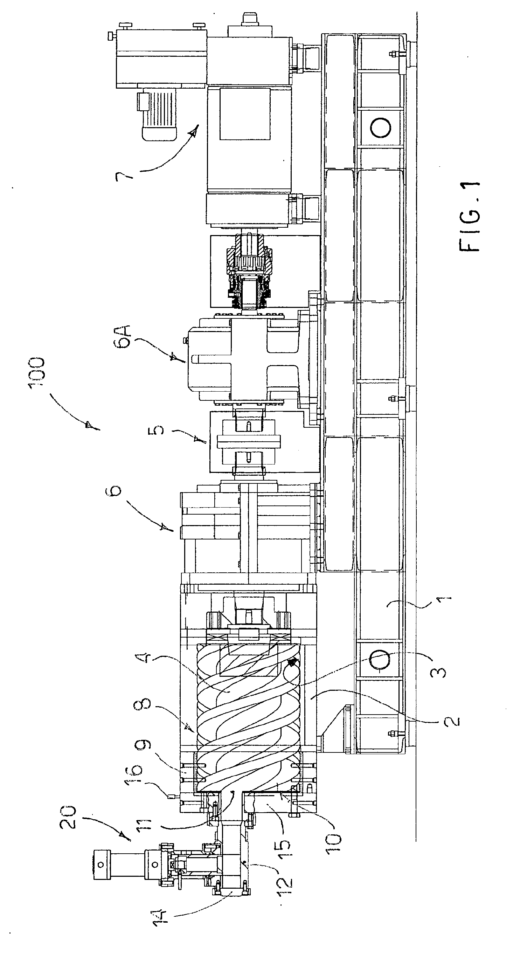

With reference for now to Figure 1, the densifier 100 comprises a base 1 on which a feed portion 2 is mounted. A densifier cylinder 9 is disposed in the front part of the feed portion 2.

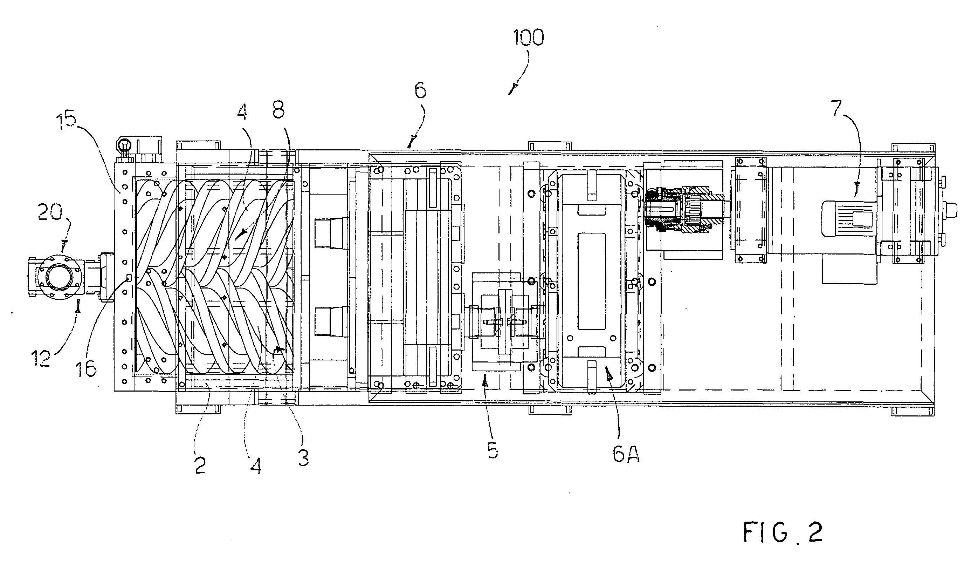

The feed portion 2 and the densifier cylinder 9 define a densifier chamber 3 inside which two screws or worms 4 (Figures 2 e 3) rotate. The densifier screws 4 have their axes parallel to each other disposed on a substantially horizontal plane and are counter-rotating. One densifier screw has a left-hand thread, whereas the other has a right-hand thread.

The densifier screws 4 are connected to a drive splitter 6. The drive splitter 6 is connected to a speed reducer 6A by a self-aligning joint 5. The speed reducer 6A is set in rotation by a motor 7 disposed in the rear part of the base 1. The motor 7 sets in rotation the speed reducer 6A which, by means of the joint 5, sets in rotation the drive splitter 6 which transmits the rotation to the densifier screws 4 so as to make them rotate in opposite directions.

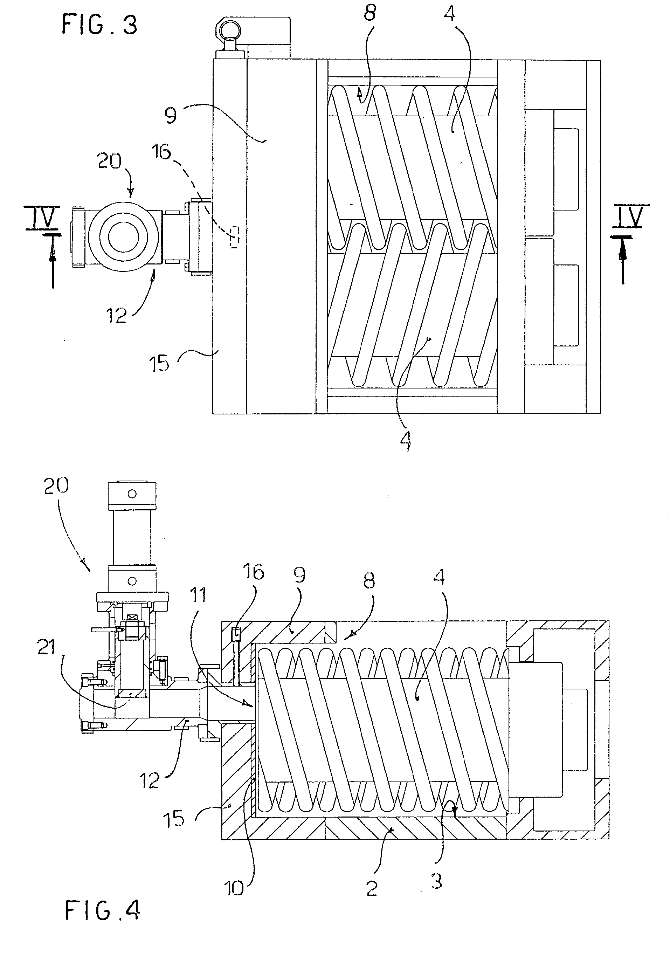

As shown better in Figures 3 e 4, a wide feed mouth 8 is defined in the top part of the feed portion 2, through which the plastic material is fed. The feed mouth 8 is substantially rectangular in shape with an indicative width of about 1.6-1.9 D and a length of about 0.8-1.2 D, where D is the diameter of a single densifier screw 4.

The feed mouth 8 extends from the rear portion of the densifier screws 4 for a large part of the length of the screws 4. The densifier cylinder 9 covers at the top a front portion of the densifier screws 4 for an indicative length of 0.4-0.7 D. In this manner, only a limited portion of the screws 4 remains covered at the top by the densifier cylinder 9.

The densifier cylinder 9 has a heating or heat regulation system that is brought into operation each time the machine 100 is re-started to melt the residual plastic material that has accumulated in the densifier cylinder 9 during the cycle of the previous process, so as not to put the machine 100 under stress during restarting because of the friction of the solid plastic material that has accumulated in the densifier cylinder 9.

In the front end of the densifier chamber there is a transverse densifier plate 10 wherein a through hole 11 is formed communicating with an outlet duct 12 terminating in an outlet mouth 14 wherefrom the densified and plasticated material exits. The hole 11 in the densifier plate 10 is coaxial with respect to the outlet duct 12 and offset vertically with respect to the axis of the densifier chamber 3.

To be exact, the centre of the hole 11 of the densifier plate 10 is disposed substantially to coincide with a vertical plane passing through the axis of symmetry between the axes of the two screws 4 and above the horizontal plane whereon the axes of the screws 4 lie. The diameter of the hole 11 in the densifier plate is smaller than the diameter of a densifier screw and is indicatively equal to 0,2-0,4 D to ensure an adequate densifying ratio. The diameter of the hole in the densifier plate coincides substantially with the diameter of the outlet duct 12.

The densifier cylinder 9 is closed at the front by a closing plate 15, which supports the densifier plate 10 on the inside and the outlet duct 12 on the outside. The outlet duct 12 protrudes forward from the closing plate 15 for a length of about 0.5 D.

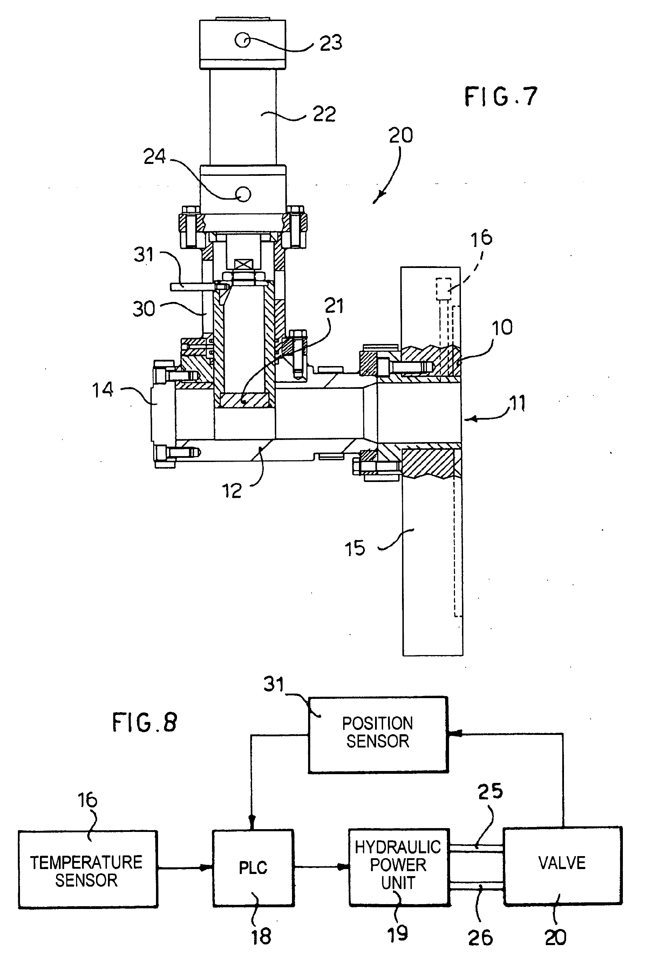

Temperature measuring means 16 are provided in the densifier cylinder 9, such as for example a contact temperature sensor, able to measure the temperature of the molten mass inside the densifier cylinder 9. The temperature sensor 16 measures the data (°C) of the product, which are analyzed by a programmable logic (PLC) 18 of the machine (Figure 8).

By way of example, in the drawings the temperature sensor 16 has been illustrated incorporated into the closing plate 15 of the plastication cylinder to measure the temperature of the molten mass after it has come into contact with the densifier plate 10; however, it could also be installed in another part of the densifier cylinder 9 or even in the outlet duct 12.

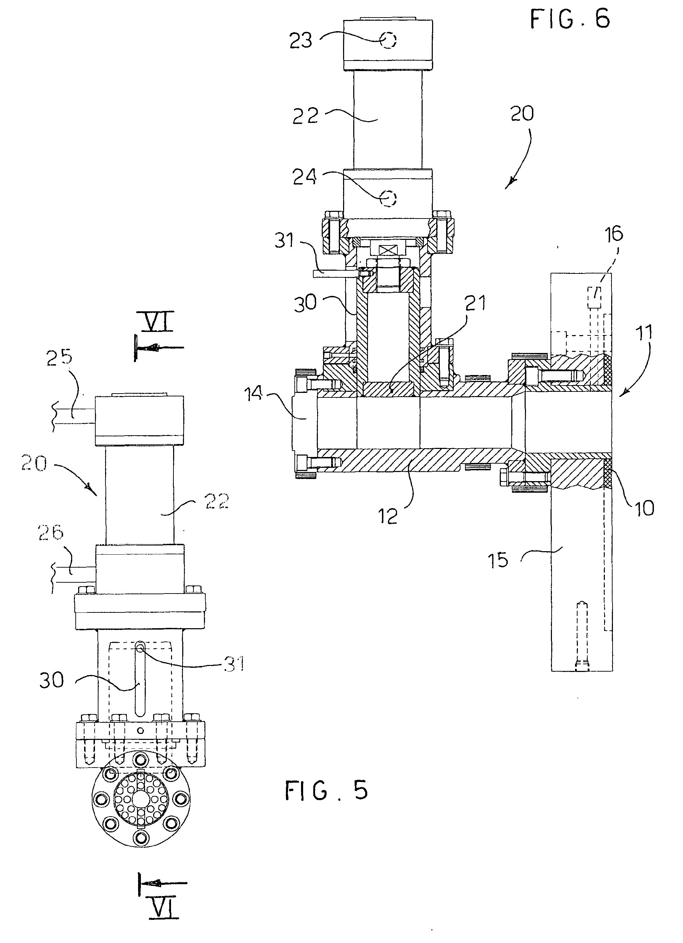

As shown better in Figures 5 and 6, a control valve, indicated as a whole with reference numeral 20, is provided in the top part of the outlet duct 12, downstream from the temperature sensor 16. The control valve 20 comprises a shutter 21 in the form of a piston slidable inside a hydraulic cylinder 22.

The stroke of the shutter 21 extends at right angles to the axis of the outlet duct 12 and is about equal to the inside diameter of the duct 12. In this manner, the shutter 21 can pass from a retracted position in the cylinder 22 (completely open position of the valve 20; Figure 6) in which it leaves the passage of the outlet duct 12 free to a forward position (completely closed position of the valve 20) in which it completely closes the passage of the outlet duct 12. Between the completely open position and the completely closed position, the shutter 21 of the valve 20 can take on a plurality of intermediate positions (Figure 7) in which it partially closes the passage of the outlet duct 12.

As shown in Figure 6, the hydraulic cylinder 22 of the valve 20 has a first oil supply hole 23 and a second oil supply hole 24 communicating with respective oil chambers provided inside the cylinder 22. In this manner, if oil is supplied to the first hole 23, the shutter 21 moves downward towards the closed position. If, on the other hand, oil is supplied to the second hole 24, the shutter 21 moves upwards towards the open position. The holes 23 and 24 of the hydraulic cylinder are connected by means of respective ducts 25 and 26 (Figure 5) to a hydraulic power unit 19 (Figure 8). The hydraulic power unit 19 is provided with solenoid valves to control the oil flow towards the hydraulic cylinder 22 to control the movement of the shutter 21.

In the bottom part of the cylinder 22 of the valve 20 there is a longitudinal slot 30 within which slides a rod 31 integral with the shutter 21 and protruding radially therefrom. The rod 31 indicates the position of the shutter 21 to a position sensor in the form of a linear transducer. The length of the slot 30 is substantially equal to the stroke of the piston 21. As shown in Figure 8, the position sensor 31 is operatively connected to the PLC 18 to send a signal indicating the position of the shutter 21.

The PLC 18 is operatively connected to the valve 20 to control it according to the temperature signal detected by the temperature sensor 16 and to the position of the shutter 21 detected by the position sensor 31. If the valve 20 is controlled hydraulically, the PLC 18 is connected to the hydraulic power unit 19 that, through the oil ducts 25 and 26, supplies the respective chambers of the cylinder 22 of the valve 20.

As shown in Figure 8, the position (open/closed) of the oburator 21 of the valve 20 is detected by the linear transducer 31 operatively connected to the programmable logic (PLC) 18 which manages the movement of the shutter 21 of the valve 20 on the basis of the temperature set and detected by the temperature sensor 16.

The densifying process according to the invention will now be described.

At the start of the cycle the densifier cylinder 9 is heated so as to bring any plastic residue to the semi-liquid state. The plastic materials are fed from the feed mouth 8 into the densifier chamber wherein the two counter-rotating screws 4 are disposed.

Rotation of the two screws 4 in opposite directions performs a first heating of the plastic materials and at the same time pushes said materials towards the densifier plate 10. The materials that are compressed against the densifier plate 10 undergo an increase in temperature by friction and thus they are brought to the molten state for the plastication process.

Heating of the materials by friction against the densifier plate 10 causes evaporation of the water contained therein. It should be noted that the shape of the wide feed mouth 8 allows the steam that forms in the densifier cylinder 9 to exit easily.

The material in the molten state passes through the hole 11 in the densifier plate and is pushed into the outlet duct 12. The temperature sensor 16 detects the temperature of the molten material inside the densifier cylinder 9. Then, the temperature sensor 16 sends the PLC 18 a signal indicating the detected temperature.

In the meantime the PLC 18 detects the exact position of the shutter 21 of the valve 20, by means of the position sensor 31. According to the temperature signal received from the temperature sensor 16 and to the position signal received from the position sensor 31, the PLC 18 sends a control signal to the solenoid valves of the hydraulic power unit 19 to control the movement of the shutter 21 of the valve 20.

It is clear that the PLC is programmed and set up so as to ensure a plastication temperature according to the type of material to be treated. Consequently the shutter 21 of the valve 20 is controlled so as to maintain said plastication temperature virtually constant. That is to say, if it is desired to lower the plastication temperature, the valve 20 is opened further so as to decrease the time of stay of the semi-molten material in the densifier cylinder 9. On the contrary, if it is desired to increase the plastication temperature, the valve 20 is closed further so as to increase the time of stay of the semi-molten material in the densifier cylinder 9.

Clearly, to obtain a material with the highest possible bulk density leaving the densifier chamber 3 a maximum temperature beyond which the material would undergo deterioration is set as a limit value and then the machine is made to work with that limit temperature. In this manner with the process according to the invention plasticated materials with a very high bulk density of about 1 gr/cm³ can be obtained as the output from the densifier chamber 3.

Furthermore, by suitably fixing the limit temperature of the product detected by the temperature sensor 16 and the movement of the valve shutter 21 detected by the position sensor 31, with the process according to the invention an adequate temperature and time of stay of the product inside the densifier can be achieved so as to allow evaporation of the residual moisture in the product, with the result of obtaining at the output plastic materials with an extremely low residual moisture content of the order of 1%.

Numerous variations and modifications of detail within the reach of a person skilled in the art can be made to the present embodiment of the invention without thereby departing from the scope of the invention as set forth in the appended claims.

## Claims

1. A densifier system (100) for the treatment of plastic materials with high moisture content and low bulk density, in particular heterogeneous plastic materials deriving from recovery or virgin products, comprising:
- a densifier chamber (3), wherein two screws or worms (4) rotate with opposite directions of rotation, said densifier chamber comprising:
- a feed portion (2) with an opening (8) into which the plastic material is fed, and
- a densifier cylinder (9), disposed in front of said feed portion (2), which conveys the plastic material against a densifier plate (10) in which the plastic material is heated by friction, and
- an outlet duct (12) communicating with the densifier chamber (3) through a hole (11), defined in said densifier plate (10), from which the plastic material exits,
**characterised in that** it further comprises
- a control valve (20) provided with a shutter (21) to control the flow of the plasticated material in said outlet duct (12), and
- temperature measuring means (16) to measure the temperature of the plasticated material and to control accordingly the movement of the shutter (21) of said control valve (20).

2. A system (100) according to claim 1, **characterized in that** said control valve (20) is disposed in said outlet duct (12) and comprises a piston shutter (21) mounted slidably inside a cylinder (22) with a stroke in a radial direction with respect to the axis of said outlet duct (12).

3. A system (100) according to claim 1 or 2, **characterized in that** said control valve (20) comprises position detecting means (31) able to detect the position of the shutter (21).

4. A system (100) according to any one of the preceding claims, **characterised in that** said temperature measurement means (16) and/or said position detecting means (31) are operatively connected to a programmable logic (PLC; 18) which manages the movement of the shutter (21) of said valve.

5. A system (100) according to any one of the preceding claims, **characterised in that** said valve (20) is controlled hydraulically by means of a hydraulic power unit (19) which feeds oil into two chambers of the hydraulic cylinder (22) inside which said shutter (21) slides.

6. A method for treatment of plastic materials with a high moisture content and low bulk density comprising the following steps:
- to feed plastic materials into a feed mouth (8) of a densifier (100) comprising a densifier chamber (3) provided with two counter-rotating screws (4),
- to densify said materials inside the densifier chamber (3) by means of said counter-rotating screws (4), which push the material towards a densifier plate (10),
- to raise the temperature of the material by friction against said densifier plate (10) until it is brought to a semi-molten state,
- to feed the semi-molten material through a hole (11) in the densifier plate (10) into an outlet duct (12),
- to measure the temperature of the material inside said densifier cylinder (9), and
- to control the flow of material into the outlet duct (12) according to the temperature measured.

7. A method according to claim 6, **characterised in that** said control step is carried out by means of a control valve (20) which has a shutter (21) which intercepts the flow of material in the outlet duct (12).

8. A method according to claim 7, **characterised in that** it comprises the steps of detecting the position of said shutter (21) and of checking its movement accordingly.

9. A method according to any one of claims 6 to 8, **characterized in that** a limit temperature is set beyond which deterioration of the product occurs and **in that** the time of stay of the material in the densifier chamber (3) is controlled so as to maintain the temperature of the product beneath said limit temperature.

10. A method according to any one of claims 6 to 9, **characterised in that** it provides for preheating at least the front part of the densifier cylinder (9) to bring the residual material to a semi-molten state, before starting a new densifying cycle.
